# EUROPEAN PATENT SPECIFICATION

(11) **EP 2 612 020 B1**
(45) Date of publication and mention of the grant of the patent: **10.06.2015**
(21) Application number: 11755207.5
(22) Date of filing: 31.08.2011
(51) Int. Cl.: F02P 3/01, F02P 9/00, F02P 23/04, F02C 7/266, H01T 13/20

(54) **ELECTRICAL ARRANGEMENT OF HYBRID IGNITION DEVICE**
ELEKTRISCHE ANORDNUNG EINER HYBRIDZÜNDVORRICHTUNG
AGENCEMENT ÉLECTRIQUE D'UN DISPOSITIF D'ALLUMAGE HYBRIDE

(30) Priority: 31.08.2010 US 378673 P
(43) Date of publication of application: 10.07.2013
(73) Proprietor: Federal-Mogul Ignition Company, Southfield, MI 48033 (US)
(72) Inventor: BURROWS, John, Anthony, Northwich CW8 4NR (GB); LYKOWSKI, James, D., Temperance MI 48182 (US)
(74) Representative: Marchitelli, Mauro
(86) International application number: PCT/US2011/049924
(87) International publication number: WO 2012/030934

(56) References cited:
- EP-A1- 2 187 044
- EP-A2- 2 199 597
- WO-A1-2010/011838
- WO-A2-2004/047146
- US-A- 5 654 868

## Description

### CROSS REFERENCE TO RELATED APPLICATION

This application claims the benefit of application serial number 61/378,673 filed August 31, 2010.

### BACKGROUND OF THE INVENTION

### 1. Field of the Invention

This invention relates generally to a corona ignition system and method for igniting a mixture of fuel and air of a combustion chamber.

### 2. Description of the Prior Art

Corona ignition systems are often preferred for providing robust ignition without the high temperatures and related consequences of conventional spark ignition systems. The corona ignition system includes an igniter having an electrode extending into a combustion chamber. The ground is provided by walls of the combustion chamber or a piston reciprocating in the combustion chamber. The igniter does not include a ground electrode. The electrode of the igniter receives energy from an energy supply and emits an electrical discharge, preferably in the form of a corona discharge. A corona discharge is an electrical field including a plurality of ionized streamers having high electrical impedance from the electrode to the ground. When fuel is supplied to the combustion chamber, the electrical field ignites the mixture of fuel and air in the combustion chamber. An example of a corona ignition system is disclosed in U.S. Patent No. 6,883,507 to Freen.

As energy is supplied the electrode, the concentration of ions in the electrical field increases. A high voltage is preferred to provide a robust corona discharge. However, if the voltages increases beyond a certain threshold, the increasing ion concentration results in a cascading process typically causing the corona discharge to transform into an arc discharge. An arc discharge is an electrical field including a single streamer providing a conductive path from the electrode to the ground. In typically corona ignition systems, when arc discharge occurs, all of the stored energy of the system is immediately discharged and depleted. The arc discharge may be of short duration and thus not capable of providing reliable ignition. Accordingly, the energy level provided to the electrode is typically at the highest voltage that can provide a corona discharge without switching to an arc discharge.

Oftentimes the voltage passes the corona discharge threshold and the arc discharge occurs. In addition, other situations or engine conditions can cause arc discharge. The arc discharge may also occur when the igniter is fouled by fuel of carbon deposits, or when the piston is too close to the igniter, or during other situations where there is low electrical resistance between the electrode and ground. The arc discharge is typically unintentionally formed and undesirable, but there are certain situations where arc discharge is intentionally formed. In attempt to stop the arc discharge and restore corona discharge, when arc discharge is undesirable, the voltage supplied to the electrode is immediately decreased. However, reducing the voltage is oftentimes not practical or not effective in returning to corona discharge and providing reliable ignition.

### SUMMARY OF THE INVENTION

One aspect of the invention provides a corona ignition system for igniting a mixture of fuel and air of a combustion chamber. The system includes an electrode for providing an electrical discharge, a corona drive circuit, and an energy storage circuit. The corona drive circuit transmits energy to the electrode in an amount capable of maintaining a corona discharge. The energy circuit is auxiliary to the corona drive circuit and stores energy while the corona drive circuit transmits the energy to the electrode. The energy circuit transmits the stored energy to the electrode to intentionally maintain the arc discharge upon detecting the arc discharge.

Another aspect of the invention provides a method for igniting a mixture of fuel and air of a combustion chamber. The method comprises the steps of: transmitting energy from a corona drive circuit to an electrode in an amount capable of maintaining a corona discharge, and storing energy in an energy circuit auxiliary to the corona drive circuit while providing energy to the electrode. The method further includes detecting an arc discharge emitting from the electrode, and intentionally maintaining the arc discharge by transmitting the stored energy from the energy circuit to the electrode upon detecting the arc discharge.

Instead of decreasing the energy provided to the electrode at the onset of arc discharge, as in systems of the prior art, the system and method of the present invention includes providing energy stored in an auxiliary energy circuit to the electrode to intentionally maintain the arc discharge and ensure a robust and reliable ignition.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a diagram of the corona ignition system according to one embodiment of the invention showing alternate energy delivery paths A, B, and C;
Figure 2 is a diagram of the system of Figure 1 showing energy delivery path A;
Figure 3 is a diagram of the system of Figure 1 showing energy delivery path B; and
Figure 4 is a diagram of the system of Figure 1 showing energy delivery path C.

### DETAILED DESCRIPTION OF THE ENABLING EMBODIMENTS

One aspect of the invention provides a corona ignition system **20** for igniting a mixture of fuel and air of a combustion chamber **32** comprising a firing end assembly **22,** a corona drive circuit **26,** and an energy storage and delivery circuit, referred to as an energy circuit **28.** The firing end assembly **22** comprises an igniter **24** including an electrode **30** projecting into a combustion chamber **32.** The corona drive circuit **26** transmits energy to the electrode **30** in an amount capable of emitting an electrical discharge, typically corona discharge but maybe arc discharge, from the electrode **30.** The energy circuit **28** is auxiliary to the corona drive circuit **26** and stores supplemental energy while the corona drive circuit **26** transmits energy to the electrode **30.** When arc discharge is detected, the energy circuit **28** then transmits the stored energy to the electrode **30** to intentionally maintain the arc discharge **29.** The stored energy transmitted to the electrode **30** provides a robust arc discharge **29,** which accordingly provides reliable ignition.

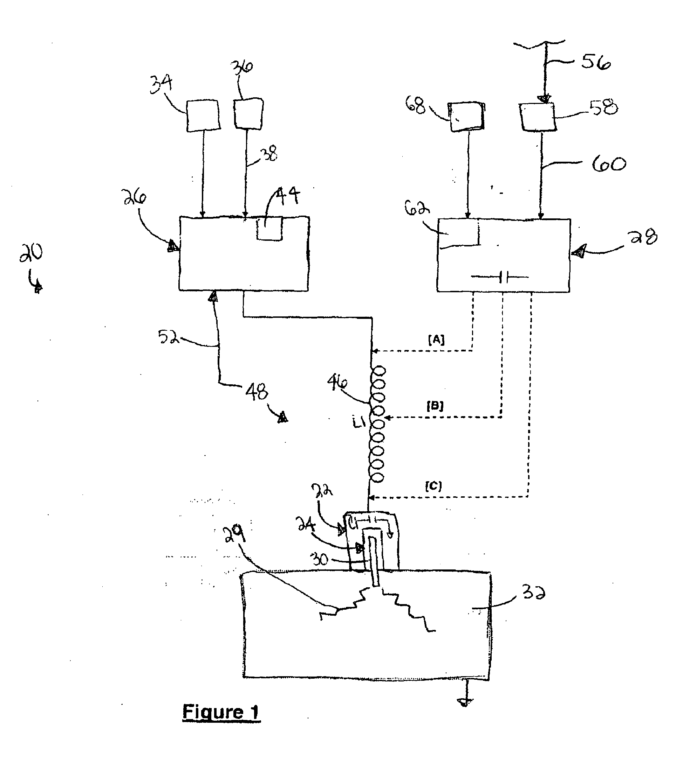

The igniter **24** of the firing end assembly **22** is installed in a cylinder head of the engine (not shown), typically an internal combustion engine of an automotive vehicle, such as a hybrid vehicle, or a gas turbine engine. The electrode **30** of the igniter **24** typically includes a firing tip for emitting the electrical field.. As shown in Figure 1, the system **20** includes a drive power supply **34** providing the energy to the corona drive circuit **26** and ultimately to the electrode **30.** In an automotive vehicle, the drive power supply **34** is typically a 12 volt battery, but can be another power source.

The corona ignition system **20** is designed to provide energy to the electrode **30** at a predetermined time, duration, and voltage level such that the electrode **30** emits the electrical field, typically in the form of a corona discharge, and ignition occurs along the entire length of the electrical field. The predetermined time, duration and voltage level may be calculated or determined by an engine control unit (ECU) of the vehicle. The voltage level is typically the highest voltage capable of providing a corona discharge without forming an arc discharge. The system **20** includes a drive circuit controller **36** providing a drive control signal **38** to the corona drive circuit **26,** indicating the predetermined time, duration, and voltage level required to achieve corona discharge. The drive circuit controller **36** can be integral with the ECU, or can be a separate unit.

Upon receiving the energy from the drive power supply **34,** and receiving the drive control signal **38** from the drive circuit controller **36,** the corona drive circuit **26** manipulates the energy to output an AC current and to meet the predetermined time, duration, and voltage level required to achieve the corona discharge. The corona drive circuit **26** also manipulates the energy to match a particular resonance frequency, which will be discussed further below. The corona drive circuit **26** is a high frequency oscillating circuit which may also include a transformer, referred to as a drive transformer **44.** The circuit **26** is used to manipulate the energy provided by the drive power supply **34.**

The corona drive circuit **26** then transmits the manipulated AC current of energy to a tuned or LC circuit **48,** as shown in Figure 1. The LC circuit is also referred to as an LC resonant circuit or LC resonator. The LC circuit is provided by a resonating inductor **46** and capacitance (**C1**) of the firing end assembly **22,** as shown in Figure 1. The resonating inductor **46** operates at a particular voltage **(L1)** and is provided by a coil of metal, such as copper. The coil is referred to as the first coil **50,** and is coupled to the electrode **30** of the igniter **24**,. The resonating inductor **46** also operates at a resonance frequency. As alluded to above, a feedback loop signal **52** from the LC circuit **48** to the corona drive circuit **26** conveys the resonance frequency to the corona drive circuit **26,** and the corona drive circuit **26** manipulates the supplied energy to match the resonating frequency.. The system **20** can also include electrical connection and insulation components between the resonating inductor **46** and electrode **30.**

Upon receiving the energy from the corona drive circuit **26,** the LC circuit **48** transforms the energy prior to transmitting it to the electrode **30.** The LC circuit **48** typically amplifies the voltage and decreases the current. In one embodiment, the LC circuit **48** increases the energy to a voltage of up to 15,000 volts, typically 5,000 to 10,000 volts. The energy is then transmitted from the LC circuit **48** to the electrode **30** to provide the corona discharge.

As stated above, when the electrode **30** of the igniter **24** receives the energy from the LC circuit **48,** the resonance causes a high voltage at the electrode **30,** and the electrode **30** emits the electrical field in the surrounding air of the combustion chamber **32,** preferably in the form of corona discharge, but possibly in the form of arc discharge. The predetermined voltage level provided to the electrode **30** is typically the highest voltage that can provide a corona discharge without switching to an arc discharge. When fuel is supplied to the combustion chamber **32,** the electrical field ignites the mixture of fuel and air in the combustion chamber **32** along the entire length of the electrical field. If the electrode is emitting the corona discharge and providing reliable ignition, the corona ignition system **20** may operate without employing the stored energy from the energy circuit **28.**

However, to ensure reliable ignition in the event arc discharge occurs, or if corona discharge switches to arc discharge, supplemental energy is stored in the energy circuit **28** auxiliary to the corona drive circuit **26** at startup and simultaneously while the system **20** operates. In the event of arc discharge, or if the corona discharge switches to arc discharge, the energy of the corona drive circuit **26** is immediately depleted. The arc discharge immediately causes the small amount of energy stored in the LC resonator **48** to discharge. Typically, the arc discharge remains for a short period of time, but not long enough to ensure reliable ignition.

Thus, to ensure reliable ignition upon the occurrence of the arc discharge, the energy stored in the energy circuit **28** is immediately discharged into the system **20** and ultimately transmitted to the electrode **30** to intentionally maintain the arc discharge **29.** The stored energy is transmitted to the electrode **30** in an amount great enough to maintain the arc discharge **29** at a robust level and duration, and the intentionally maintained arc discharge **29** ignites the mixture of fuel and air in the combustion chamber **32.**

As stated above, various conditions can trigger the onset of the arc discharge, but the arc discharge typically occurs when the voltage provided to the electrode **30** surpasses a certain threshold. Any method known in the art can be used to detect the onset or presence of arc discharge. Upon detecting the arc discharge, an arc feedback signal **56** is transmitted to a controller of the energy circuit **28,** referred to as an energy controller **58.** The energy controller **58** receives the arc feedback signal **56,** then transmits an arc control signal **60** to the energy circuit **28,** initiating and instructing the energy circuit **28** to discharge the stored energy for transmission to the electrode **30.** The energy controller **58** can be integrated with the ECU or the drive circuit controller **36,** or can be a separate unit.

The energy circuit **28** typically includes a capacitor, referred to as the energy capacitor **62,** for storing the additional energy. The energy capacitor **62** stores energy in an amount much greater than the amount stored by the LC resonant circuit **48** or other capacitors typical used corona ignition systems **20,** typically 100 to 200 times greater. As stated above, the amount of energy stored in typical corona ignition systems **20** is not enough to initiate and maintain arc discharge once an arc discharge occurs.

In one embodiment, as shown in Figures 1-4, the corona ignition system **20** includes a supplemental power supply, referred to as an energy power supply **68,** providing the extra energy to the energy capacitor **62.** Alternatively, the energy supplied to the energy circuit **28** may be from the same supply as the corona drive circuit **26.** In another embodiment, the extra energy is transmitted from the corona drive circuit **26** to the energy circuit **28.**

Upon receiving the arc control signal **60** from the energy controller **58,** the energy circuit **28** transmits or discharges some or all of the storage energy, which is ultimately transmitted to the electrode **30.** Thus, upon detection of the arc discharge, the stored energy supply is immediately depleted. Once the stored energy is discharged, the energy circuit **28** is immediately reset and supplemental energy is again supplied to the energy circuit **28.** Accordingly, the system **20** is again ready to discharge stored energy to the electrode **30** upon the next occurrence of arc discharge and receipt of the arc control signal **60.**

As shown in Figures 1-4, the corona ignition system **20** can transmit the stored energy to the electrode **30** according to several different paths, for example paths A, B, and C. The energy initially discharged from the energy circuit **28** is typically at a few hundred volts, which may not be great enough to initiate or maintain the arc discharge. Thus, the system **20** may include another transformer, referred to as an energy transformer **70,** to increase the voltage of the energy prior to transmitting it to the electrode **30.** The energy transformer **70** includes at least one coil of metal, referred to as a second coil **72,** electrically connected to the energy circuit **28** and electrically connected to at least one other component of the system **20,** either the LC circuit **48** or the electrode **30.**

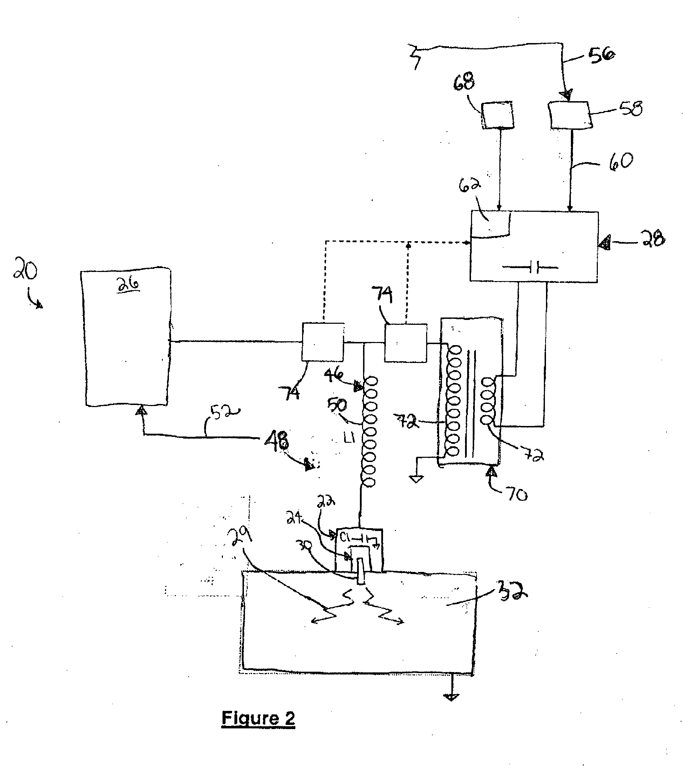

In the embodiments of Figures 2-4, the energy transformer **70** receives the stored energy from the energy circuit **28** and increases the voltage of the energy before transmitting it ultimately to the electrode **30.** The energy transformer **70** may also be used to block energy from transmitting between the electrode **30** and the energy circuit **28** and to prevent damage to the circuits **26, 28, 48.** In another embodiment, the energy transformer **70** is integrated with the drive transformer **44** of the corona drive circuit **26.** In another embodiment, the energy transformer **70** is integrated with the resonating inductor **46** of the LC circuit **48.** In yet another embodiment, a very high voltage is stored in the energy capacitor **62** of the energy circuit **28,** and thus the energy transformer **70** is not necessary.

According to one embodiment, in order to maintain a robust arc discharge **29** capable of ensuring ignition, the stored energy is discharged from the energy circuit **28** and transmitted to the electrode **30** over a predetermined period of time, rather than discharged instantaneously. In one embodiment, the predetermined period of time, referred to as a time constant is approximately one millisecond. The time constant can be quantified by comparing it to the voltage (L1) of the resonating inductor **46** and the capacitance (C1) of the firing end assembly **22..** The time constant must be longer than L1/C1, typically 100 to 2000 times longer. The energy circuit **28,** energy transformer **70,** and LC circuit **48,** are programmed to meet the predetermined time constant.

To achieve the predetermined time constant and obtain the robust arc discharge **29,** at least one blocking element **74,** may be used to block energy from transmitting to and from or between the electrode **30,** the corona drive circuit **26,** the energy circuit **28,** and other components of the system **20** during predetermined periods of time. The blocking elements **74** may also be designed to promote energy transmission between components of the system **20.** In one embodiment, the blocking elements **74** are passive, for example a filter consisting of resistive and reactive components. In another embodiment, the blocking elements **74** include linear passive elements, for example diodes, TVS, or spark gap units. In yet another embodiment, the blocking elements **74** are fully active, for example a transistor. In yet another embodiment, wherein energy is supplied to the energy circuit **28** by the corona drive circuit **26,** the blocking elements **74** are used to transmit energy from the corona drive circuit **26** to the energy capacitor **62.** The design of the blocking elements **74** and their implementation depends on the specific requirements of the corona ignition system **20** and application of the system **20.**

Figure 2 illustrates one exemplary embodiment, wherein the energy circuit **28** transmits the stored energy along path A to the electrode **30.** According to this embodiment, the energy transformer **70** is disposed between the energy circuit **28** and the resonating inductor **46** of the LC circuit **48.** The stored energy is transmitted from the energy circuit **28** through the energy transformer **70,** then through the resonating inductor **46** of the LC circuit **48** and finally to the electrode **30.** The energy transformer **70** increases the voltage of the stored energy, prior to transmitting the stored energy to the LC circuit **48.** The embodiment of Figure 2 also includes one of the blocking elements **74** between the energy transformer **70** and the LC circuit **48** and another one of the blocking elements **74** between the LC circuit **48** and the corona drive circuit **26** to prevent energy from transmitting between the electrode **30** and the corona drive circuit **26** or the energy circuit **28.** The energy circuit **28,** energy transformer **70,** and blocking elements **74** are programmed to deliver the stored energy according to the time constant to achieve the robust arc discharge **29.**

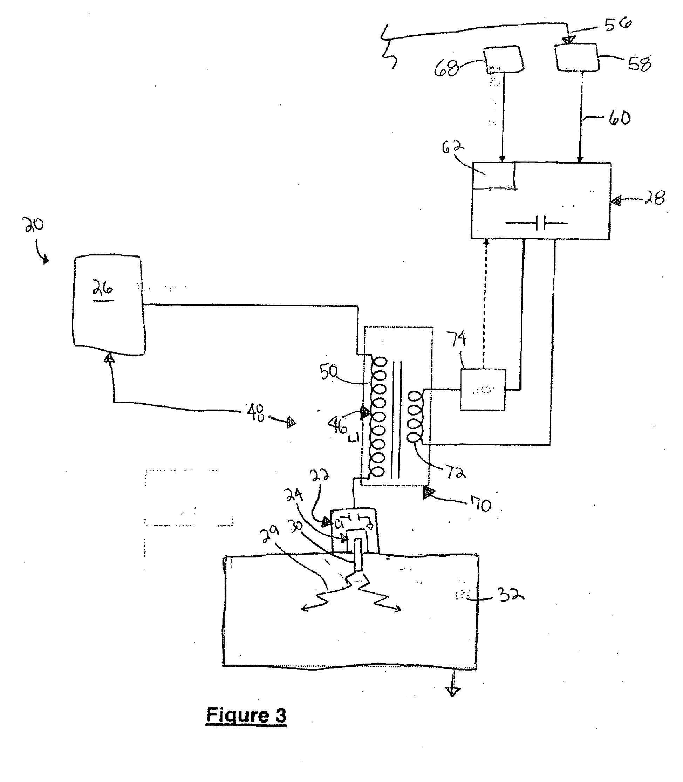

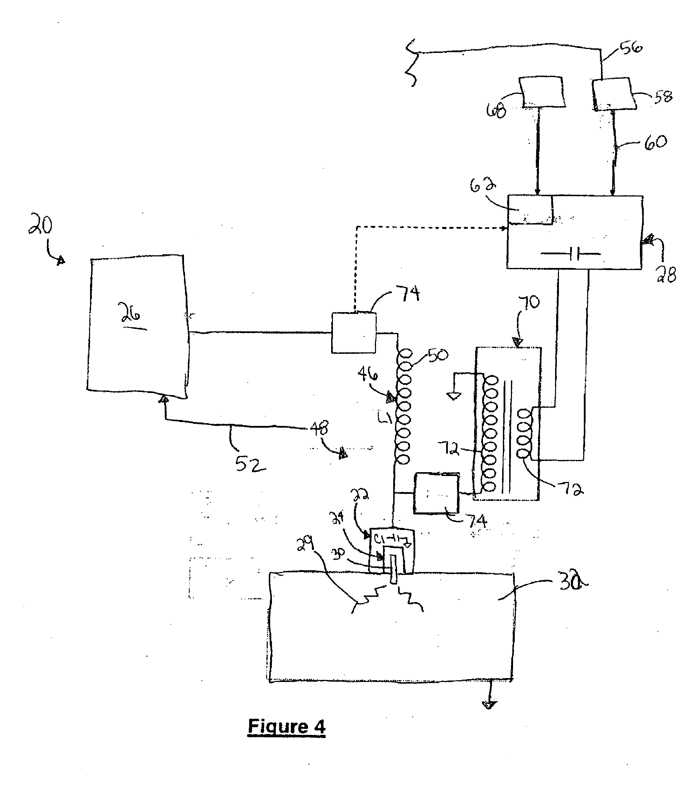

Figure 3 illustrates another exemplary embodiment, wherein the energy circuit **28** transmits the stored energy along path B to the electrode **30** and the energy transformer **70** is integral with the LC circuit **48.** This exemplary embodiment is often preferred over the embodiments of Figures 2 and 4 for its simpler construction and thus lower cost. The integrated energy transformer **70** is formed by magnetically coupling the first coil **50** of the resonating inductor **46** with a second coil **72.** A few turns of the second coil **72** are wound onto the same magnetic core as the first coil **50** of the resonating inductor **46,** but the second coil **72** is electrically isolated from the first coil **50.** The stored energy is transmitted from the energy circuit **28** through the integrated energy transformer **70** and LC circuit **48** and finally to the electrode **30.** The integrated energy transformer **70** increases the voltage of the stored energy, prior to transmitting the stored energy to the electrode **30.** The embodiment of Figure 3 also includes one blocking element **74** between the integrated energy transformer **70** and the LC circuit **48.** This blocking element **74** may prevent the energy circuit **28** from "bleeding" energy from the electrode **30,** such as energy from the corona discharge when arc discharge has not yet occurred. Alternatively, the blocking element **74** may transmit any bled energy back to the energy capacitor **62** of the energy circuit **28.** The energy circuit **28,** transformer, and blocking elements **74** are programmed to deliver the stored energy according to the time constant and over the predetermine period to achieve the robust arc discharge.

Figure 4 illustrates another exemplary embodiment, wherein the energy circuit **28** transmits the stored energy along path **C** to the electrode **30.** According to this embodiment, the energy transformer **70** is auxiliary to the resonating inductor **46** of the LC circuit **48** and is disposed between the energy circuit **28** and the electrode **30.** In this embodiment, the energy is transmitted from the energy circuit **28** directly to the electrode **30,** and does not pass through the LC circuit **48.**

The embodiment of Figure 4 also includes one blocking element **74** between the energy transformer **70** and the LC circuit **48** to prevent energy from transmitting from the electrode **30** to back to the circuits **26, 28, 48,** such as from the corona discharge, before arc discharge has occurred. Another one of the blocking elements **74** is located between the corona drive circuit **26** and the LC circuit **48** to prevent energy from transmitting from the electrode **30** back to the corona drive circuit **26** and to allow energy transmission through the LC circuit **48.** The energy circuit **28,** energy transformer **70,** and blocking elements **74** are programmed to deliver the stored energy over the predetermine period of time to achieve the robust arc discharge.

Another aspect of the invention provides a method for igniting a mixture of fuel and air of an combustion chamber. As alluded to above, the method includes supplying energy and drive control signals **38** to the corona drive circuit **26** while also supplying energy to the energy circuit **28.** The method then includes transmitting energy from the corona drive circuit **26** to the electrode **30** in an amount capable of emitting the electrical discharge from the electrode **30.** In one embodiment, the step of transmitting energy from the corona drive circuit **26** to the electrode **30** includes determining and transmitting a predetermine amount of energy, wherein the predetermined amount of energy is capable of emitting a corona discharge and avoiding an arc discharge.

While the energy is transmitting from the corona drive circuit **26** to the electrode **30,** the method includes supplying and storing energy in the energy circuit **28** auxiliary to the corona drive circuit **26.** The step of storing energy in the energy circuit **28** typically includes charging the energy capacitor **62** of the energy circuit **28.** In one embodiment, the storing energy step includes transmitting energy from the corona drive circuit **26** to the energy circuit **28.**

The method also includes detecting an arc discharge emitting from the electrode **30.** Once the onset of arc discharge is detected, the method includes transmitting the arc feedback signal **56** to the energy controller **58,** and then transmitting the arc control signal **60** from the energy controller **58** to the energy circuit **28.** The arc control signal **60** initiates the step of transmitting or discharging the stored energy from the energy circuit **28** to the electrode **30** and thus intentionally maintaining an arc discharge **29.**

As soon as sufficient stored energy is discharged and transmitted to the electrode **30,** the method includes recharging the energy capacitor **62** of the energy circuit **28.** The method includes maintaining energy in the energy circuit **28** in a sufficient amount, which is an amount capable of intentionally maintaining an arc discharge **29.** Thus**,** the system **20** is immediately ready for the next occurrence of arc discharge.

As stated above, to maintain the robust arc discharge **29,** the method includes transmitting the stored energy to the electrode **30** according to the time constant, over a predetermined period of time. In one embodiment, the method includes calculating the predetermined period of time, or time constant, and conveying the time constant to the energy circuit **28** in the arc control signal **60.** The method typically includes increasing the voltage of the stored energy by the energy transformer **70,** prior to transmitting the stored energy to the electrode **30.** In one embodiment, the method includes using the blocking elements **74** for preventing or allowing energy from transmitting to and from or between the electrode **30,** the corona drive circuit **26,** the energy circuit **28,** or other components of the system **20** during predetermined periods of time, such as while transmitting the stored energy from the energy circuit **28** to the electrode **30.**

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility. The use of the word "said" in the apparatus claims refers to an antecedent that is a positive recitation meant to be included in the coverage of the claims whereas the word "the" precedes a word not meant to be included in the coverage of the claims. In addition, the reference numerals in the claims are merely for convenience and are not to be read in any way as limiting.

## Claims

1. A corona ignition system (20) for igniting a mixture of fuel and air of a combustion chamber (32), comprising:
an electrode (30) for providing an electrical discharge,
a corona drive circuit (26) transmitting energy to said electrode (30) in an amount capable of maintaining a corona discharge, and
an energy circuit (28) auxiliary to said corona drive circuit (26) for storing energy while said corona drive circuit (26) transmits said energy to said electrode (30) and transmitting said stored energy to said electrode (30) to intentionally maintain arc discharge (29) upon detecting said arc discharge.

2. The system (20) of claim 1 wherein said energy circuit (28) includes an energy capacitor (62) for storing said energy and including an energy controller (58) receiving an arc feedback signal (56) and transmitting an arc control signal (60) to said energy circuit (28) upon detection of said arc discharge, wherein said arc control signal (60) initiates transmitting said stored energy to said electrode (30).

3. The system (20) of claim 1 further comprising a firing end assembly (22) having a capacitance and including said electrode; an LC circuit including a resonating inductor and said capacitance of said firing end assembly (22) for transforming said energy prior to transmitting said energy to said electrode (30); and an energy transformer (70) electrically connected to said energy circuit (28) and said resonating inductor (46) of said LC circuit (48) for increasing the voltage of said stored energy.

4. The system (20) of claim 3 wherein said energy transformer (70) is disposed between said energy circuit (28) and said resonating inductor (46) of said LC circuit (48) for transmitting said stored energy through said resonating inductor (46).

5. The system (20) of claim 3 wherein said energy transformer (70) is integral with said resonating inductor (46) of said LC circuit (48).

6. The system (20) of claim 3 wherein said energy transformer (70) is auxiliary to said resonating inductor (46) of said LC circuit (48) for transmitting said stored energy directly to said electrode (30).

7. The system (20) of claim 1 including a blocking element (74) preventing energy from transmitting between said electrode (30) and at least one of said corona drive circuit (26) and said energy circuit (28) during predetermined periods of time.

8. A method for igniting a mixture of fuel and air of a combustion chamber (32), comprising the steps of:
transmitting energy from a corona drive circuit (26) to an electrode (30) in an amount capable of maintaining a corona discharge,
storing energy in an energy circuit (28) auxiliary to the corona drive circuit (26) while providing the energy to the electrode (30),
detecting an arc discharge emitting from the electrode (30), and
intentionally maintaining the arc discharge (29) by transmitting the stored energy from the energy circuit (28) to the electrode (30) upon detecting the arc discharge.

9. The method of claim 8 including transmitting an arc control signal (60) to the energy circuit (28) to initiate the step of transmitting the stored energy upon detecting the arc discharge.

10. The method of claim 9 including transmitting an arc feedback signal to initiate the step of transmitting the arc control signal (60) upon detecting the arc discharge.

11. The method of claim 8 wherein the step of transmitting the stored energy from the energy circuit (28) to the electrode (30) includes maintaining energy in the energy circuit (28) in an amount capable of maintaining an arc discharge (29).

12. The method of claim 8 wherein the step of storing energy includes charging an energy capacitor (62) of the energy circuit (28) and/or transmitting energy from the corona drive circuit (26) to the energy circuit (28).

13. The method of claim 12 including recharging the energy capacitor (62) of the energy circuit (28) upon transmitting the stored energy from the energy circuit (28) to the electrode (30).

14. The method of claim 8 including transmitting the stored energy to the electrode (30) over a predetermined period of time and preventing energy from transmitting between the electrode (30) and at least one of the corona drive circuit (26) and the energy circuit (28) during predetermined periods of time.

15. The method of claim 8 including increasing a voltage of the stored energy prior to transmitting the stored energy to the electrode (30).

## Patentansprüche

1. Korona-Zündsystem (20) zum Zünden eines Kraftstoff-Luft-Gemischs einer Verbrennungskammer (32), umfassend:
eine Elektrode (30) zum Bereitstellen einer elektrischen Entladung,
einen Korona-Antriebskreis (26), der an die Elektrode (30) Energie in einer Menge überträgt, die geeignet ist, eine Korona-Entladung aufrechtzuerhalten, und
einen zum Korona-Antriebskreis (26) zusätzlichen Energiekreis (28) zum Speichern von Energie, während der Korona-Antriebskreis (26) die Energie an die Elektrode (30) überträgt, und zum Übertragen der gespeicherten Energie an die Elektrode (30), um beim Erkennen von Bogenentladung (29) diese Bogenentladung absichtlich aufrechtzuerhalten.

2. System (20) nach Anspruch 1, wobei der Energiekreis (28) einen Energiekondensator (62) zum Speichern der Energie beinhaltet, der eine Energiesteuerung (58) beinhaltet, die ein Bogenrückmeldesignal (56) empfängt und bei Erkennung der Bogenentladung ein Bogensteuerungssignal (60) an den Energiekreis (28) überträgt, wobei das Bogensteuerungssignal (60) das Übertragen der gespeicherten Energie an die Elektrode (30) auslöst.

3. System (20) nach Anspruch 1, ferner umfassend eine zündseitige Anordnung (22) mit einer Kapazität, welche die Elektrode beinhaltet; einen LC-Kreis, der einen schwingenden Induktor und die Kapazität der zündseitigen Anordnung (22) zum Umwandeln der Energie vor dem Übertragen der Energie an die Elektrode (30) beinhaltet; und einen Energiewandler (70), der mit dem Energiekreis (28) und dem schwingenden Induktor (46) des LC-Kreises (48) elektrisch verbunden ist, zum Erhöhen der Spannung der gespeicherten Energie.

4. System (20) nach Anspruch 3 wobei der Energiewandler (70) zwischen dem Energiekreis (28) und dem schwingenden Induktor (46) des LC-Kreises (48) angeordnet ist, um die gespeicherte Energie durch den schwingenden Induktor (46) zu übertragen.

5. System (20) nach Anspruch 3 wobei der Energiewandler (70) mit dem schwingenden Induktor (46) des LC-Kreis (48) fest verbunden ist.

6. System (20) nach Anspruch 3, wobei der Energiewandler (70) zusätzlich zum schwingenden Induktor (46) des LC-Kreises (48) ist, um die gespeicherte Energie direkt an die Elektrode (30) zu übertragen.

7. System (20) nach Anspruch 1, beinhaltend ein Sperrelement (74), das die Übertragung von Energie zwischen der Elektrode (30) und zumindest dem Korona-Antriebskreis (26) und/oder dem Energiekreis (28) während vorbestimmter Zeiträume verhindert.

8. Verfahren zum Zünden eines Kraftstoff-Luft-Gemischs einer
Verbrennungskammer (32), umfassend folgende Schritte:
Übertragen von Energie von einem Korona-Antriebskreis (26) an eine Elektrode (30) in einer Menge, die geeignet ist, eine Korona-Entladung aufrechtzuerhalten,
Speichern von Energie in einem zum Korona-Antriebskreis (26) zusätzlichen Energiekreis (28) während des Bereitstellens der Energie an die Elektrode (30),
Erkennen einer von der Elektrode (30) ausgehende Bogenentladung, und
absichtliches Aufrechterhalten der Bogenentladung (29) durch Übertragen der gespeicherten Energie vom Energiekreis (28) an die Elektrode (30) beim Erkennen der Bogenentladung.

9. Verfahren nach Anspruch 8, beinhaltend das Übertragen eines Bogensteuerungssignals (60) an den Energiekreis (28), um den Schritt des Übertragens der gespeicherten Energie beim Erkennen der Bogenentladung auszulösen.

10. Verfahren nach Anspruch 9, beinhaltend das Übertragen eines Bogenrückmeldesignals, um den Schritt des Übertragens des Bogensteuerungssignals (60) beim Erkennen der Bogenentladung auszulösen.

11. Verfahren nach Anspruch 8, wobei der Schritt des Übertragens der gespeicherten Energie vom Energiekreis (28) an die Elektrode (30) das Behalten von Energie im Energiekreis (28) in einer Menge, die geeignet ist, eine Bogenentladung (29) aufrechtzuerhalten, beinhaltet.

12. Verfahren nach Anspruch 8, wobei der Schritt des Speicherns von Energie das Laden eines Energiekondensators (62) des Energiekreises (28) und/oder das Übertragen von Energie vom Korona-Antriebskreis (26) an den Energiekreis (28) beinhaltet.

13. Verfahren nach Anspruch 12, beinhaltend das Wiederladen des Energiekondensators (62) des Energiekreises (28) beim Übertragen der gespeicherten Energie vom Energiekreis (28) an die Elektrode (30).

14. Verfahren nach Anspruch 8, beinhaltend das Übertragen der gespeicherten Energie an die Elektrode (30) über einen vorbestimmten Zeitraum und das Verhindern der Übertragung von Energie zwischen der Elektrode (30) und zumindest dem Korona-Antriebskreis (26) und/oder dem Energiekreis (28) während vorbestimmter Zeiträume.

15. Verfahren nach Anspruch 8, beinhaltend das Erhöhen einer Spannung der gespeicherten Energie vor dem Übertragen der gespeicherten Energie an die Elektrode (30).

## Revendications

1. Système d'allumage à effet corona (20) pour l'allumage d'un mélange de carburant et d'air d'une chambre de combustion (32), comportant :
une électrode (30) destiné à procurer une décharge électrique,
un circuit de commande d'effet corona (26) transmettant de l'énergie à ladite électrode (30) dans une quantité capable de maintenir une décharge corona, et
un circuit d'énergie (28) auxiliaire dudit circuit de commande d'effet corona (26) destiné à stocker de l'énergie alors que ledit circuit de commande d'effet corona (26) transmet ladite énergie à ladite électrode (30) et à transmettre ladite énergie stockée à ladite électrode (30) pour maintenir intentionnellement une décharge en arc (29) lors de la détection de ladite décharge en arc.

2. Système (20) selon la revendication 1 dans lequel ledit circuit d'énergie (28) comprend un condensateur d'énergie (62) destiné à stocker ladite énergie et comprenant un circuit de commande d'énergie (58) recevant un signal de rétroaction d'arc (56) et transmettant un signal de commande d'arc (60) audit circuit d'énergie (28) lors d'une détection de ladite décharge en arc, dans lequel ledit signal de commande d'arc (60) démarre la transmission de ladite énergie stockée à ladite électrode (30).

3. Système (20) selon la revendication 1 comportant en outre un ensemble d'extrémité d'allumage (22) ayant une capacité et comprenant ladite électrode ; un circuit LC comprenant une inductance résonnante et ladite capacité dudit ensemble d'extrémité d'allumage (22) pour la transformation de ladite énergie avant de transmettre ladite énergie à ladite électrode (30) ; et un transformateur d'énergie (70) électriquement relié audit circuit d'énergie (28) et à ladite inductance résonnante (46) dudit circuit LC (48) afin d'augmenter la tension de ladite énergie stockée.

4. Système (20) selon la revendication 3 dans lequel ledit transformateur d'énergie (70) est disposé entre ledit circuit d'énergie (28) et ladite inductance résonnante (46) dudit circuit LC (48) pour transmettre ladite énergie stockée par l'intermédiaire de ladite inductance résonnante (46).

5. Système (20) selon la revendication 3 dans lequel ledit transformateur d'énergie (70) fait partie intégrante de ladite inductance résonnante (46) dudit circuit LC (48).

6. Système (20) selon la revendication 3 dans lequel ledit transformateur d'énergie (70) est un auxiliaire de ladite inductance résonnante (46) dudit circuit LC (48) pour transmettre ladite énergie stockée directement à ladite électrode (30).

7. Système (20) selon la revendication 1 comprenant un élément de blocage (74) empêchant l'énergie d'être transmise entre ladite électrode (30) et au moins un dudit circuit de commande d'effet corona (26) et dudit circuit d'énergie (28) pendant des durées prédéterminées.

8. Procédé d'allumage d'un mélange de carburant et d'air d'une chambre de combustion (32), comportant les étapes consistant à :
transmettre de l'énergie d'un circuit de commande d'effet corona (26) à une électrode (30) dans une quantité capable de maintenir une décharge corona,
stocker de l'énergie dans un circuit d'énergie (28) auxiliaire du circuit de commande d'effet corona (26) tout en délivrant de l'énergie à l'électrode (30),
détecter une décharge en arc émise par l'électrode (30), et
maintenir intentionnellement la décharge en arc (29) en transmettant l'énergie stockée du circuit d'énergie (28) à l'électrode (30) lors de la détection de la décharge en arc.

9. Procédé selon la revendication 8 comprenant le fait de transmettre un signal de commande d'arc (60) au circuit d'énergie (28) afin de démarrer l'étape de transmission de l'énergie stockée lors de la détection de la décharge en arc.

10. Procédé selon la revendication 9 comprenant le fait de transmettre un signal de rétroaction d'arc afin de démarrer l'étape de transmission du signal de commande d'arc (60) lors de la détection de la décharge en arc.

11. Procédé selon la revendication 8 selon lequel l'étape de transmission de l'énergie stockée du circuit d'énergie (28) à l'électrode (30) comprend le fait de maintenir de l'énergie dans le circuit d'énergie (28) dans une quantité capable de maintenir une décharge en arc (29).

12. Procédé selon la revendication 8 selon lequel l'étape de stockage d'énergie comprend le fait de charger un condensateur d'énergie (62) du circuit d'énergie (28) et/ou de transmettre de l'énergie du circuit de commande d'effet corona (26) au circuit d'énergie (28).

13. Procédé selon la revendication 12 comprenant le fait de recharger le condensateur d'énergie (62) du circuit d'énergie (28) lors de la transmission de l'énergie stockée du circuit d'énergie (28) à l'électrode (30).

14. Procédé selon la revendication 8 comprenant le fait de transmettre l'énergie stockée à l'électrode (30) sur une durée prédéterminée et d'empêcher de l'énergie d'être transmise entre l'électrode (30) et au moins un du circuit de commande corona (26) et du circuit d'énergie (28) pendant des durées prédéterminées.

15. Procédé selon la revendication 8 comprenant le fait d'augmenter une tension de l'énergie stockée avant de transmettre l'énergie stockée à l'électrode (30).
